# EUROPEAN PATENT SPECIFICATION

(11) **EP 4 258 424 B1**
(45) Date of publication and mention of the grant of the patent: **28.01.2026**
(21) Application number: 22887351.9
(22) Date of filing: 19.09.2022
(51) Int. Cl.: H01M 10/647, H01M 10/653, H01M 10/613, H01M 50/211, H01M 10/6554

(54) **BATTERY MODULE AND BATTERY PACK INCLUDING SAME**
BATTERIEMODUL UND BATTERIEPACK DAMIT
MODULE DE BATTERIE ET BLOC-BATTERIE LE COMPRENANT

(30) Priority: 26.10.2021 KR 20210143812
(43) Date of publication of application: 11.10.2023
(73) Proprietor: LG Energy Solution, Ltd., Seoul 07335 (KR)
(72) Inventor: KIM, Min Seop, Daejeon 34122 (KR); SEONG, Junyeob, Daejeon 34122 (KR); PARK, Myungki, Daejeon 34122 (KR)
(74) Representative: Plasseraud IP
(86) International application number: PCT/KR2022/013943
(87) International publication number: WO 2023/075147

(56) References cited:
- EP-A1- 3 567 669
- EP-A1- 3 731 304
- EP-A1- 3 748 726
- CN-A- 113 540 610
- DE-A1- 102019 117 875
- KR-A- 20160 016 500
- KR-A- 20170 020 095
- KR-A- 20180 119 990
- KR-A- 20200 003 600
- KR-A- 20200 140 476

## Description

### [TECHNICAL FIELD]

### Cross Citation with Related Application(s)

This application claims the benefit of Korean Patent Application No. 10-2021-0143812 filed on October 26, 2021 with the Korean Intellectual Property Office.

The present disclosure relates to a battery module and a battery pack including the same, and more particularly to a battery module having enhanced cooling performance and a battery pack including the same.

### [BACKGROUND]

With the technology development and increased demand for mobile devices, demand for secondary batteries as energy sources has been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In small mobile devices, one, or two, or three battery cells are used per device, while middle or large-sized devices such as vehicles require high power and large capacity. Therefore, a middle or large-sized battery module having a plurality of battery cells electrically connected to one another is used.

Since middle or large-sized battery modules are preferably manufactured with as small a size and weight as possible, a prismatic battery, a pouch-type battery, or the like, which can be stacked with high integration and has a small weight relative to capacity, is mainly used as a battery cell of the middle or large-sized battery modules. Meanwhile, the battery module may include a module frame whose front and rear surfaces are opened to house the battery cell stack in the internal space, in order to protect the battery cell stack from external impact, heat or vibration.

Further, when the temperature of the secondary battery rises higher than an appropriate temperature, the performance of the secondary battery may be deteriorated, and in the worst case, there is also a risk of an explosion or ignition. In particular, a large number of secondary batteries, that is, a battery module or a battery pack having battery cells, can add up the heat generated from the large number of battery cells in a narrow space, so that the temperature can rise more quickly and excessively. This is, a battery module in which a large number of battery cells are stacked, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

In addition, as the need for the battery module to include more battery cells increases, it is becoming very important to secure stable and effective cooling performance in relation to heat dissipation of the battery module. In addition, recently, as the amount of current per hour is increased in order to charge the battery module in a relatively short time, the need to solve the heat generation problem of battery cells is increasing.

With the trend of continuing demands such as increased capacity and rapid charging of battery modules, there is a substantial need to develop battery modules that can enhance cooling performance.

EP3748726; EP3731304 and DE102019117875 discloses a battery module including a battery cell stack in which a plurality of battery cells are stacked; and a first plate and a second plate disposed on one side and the other side of the battery cell stack, respectively, to discharge heat generated by the plurality of battery cells externally.

EP3567669 discloses a battery module, which includes: a plurality of battery cells stacked side by side; a module case; a heatsink mounted to an outer side of the module case to cool the plurality of battery cells; and at least one heat transfer pad disposed in contact with the heatsink and the plurality of battery cells to penetrate the module case at least partially.

### [DETAILED DESCRIPTION OF THE INVENTION]

### [Technical Problem]

It is an object of the present disclosure to provide a battery module having enhanced cooling performance, and a battery pack including the same.

However, the objects of the present disclosure are not limited to the aforementioned objects, and other objects which are not mentioned herein should be clearly understood by those skilled in the art from the following detailed description and the accompanying drawings.

### [Technical Solution]

According to one embodiment of the present disclosure, there is provided a battery module comprising: a battery cell stack in which a plurality of battery cells are stacked; a module frame that houses the battery cell stack; and an upper thermal conductive material layer located between the upper surface of the battery cell stack and the upper part of the module frame, wherein each battery cell includes a sealing part in which a part of an outer peripheral surface of the battery cell is sealed, and each battery cell is configured such that the sealing part is arranged in a direction toward an upper part of the module frame, wherein the upper thermal conductive material layer wraps around the outer surface of the sealing parts, and wherein the sealing parts have a length extending toward the upper part of the module frame that is equal to or greater than a length extending along the upper part of the battery cell and wherein the module frame includes penetrating parts located on the upper part of the sealing parts, and the upper thermal conductive layer extends up to the penetrating parts.

The sealing part has a length extending toward the upper part of the module frame that is greater than a length extending along the upper part of the battery cell.

The sealing part may be folded at least once in a clockwise or counterclockwise direction.

An internal thermal conductive material layer may be located on the folded surface of the sealing part.

The folded surfaces of the sealing part may be in contact with each other.

The penetrating part may be formed longer than the length of the sealing part extending along the upper part of the battery cell.

The battery module may further comprise a lower thermal conductive material layer located between the lower surface of the battery cell stack and the lower part of the module frame.

According to another embodiment of the present disclosure, there is provided a battery pack comprising the above-mentioned battery module.

### [Advantageous Effects]

According to embodiments, the present disclosure provides a battery module and a battery pack including the same in which the sealing part of the battery cell wrapped with the upper thermal conductive material layer is arranged in a direction toward the upper part of the module frame, and the sealing part has a length extending toward the upper part of the module frame that is equal to or smaller than the length extending along the upper part of the battery cell, thereby capable of minimizing thermal resistance of the sealing part and further improving the cooling performance.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view of a battery module according to one embodiment of the present disclosure;
Fig. 2 is an exploded perspective view of the battery module of Fig. 1;
Fig. 3 is a view showing a part of a cross section cut along the axis A-A' of Fig. 1; not according to the invention.
Fig. 4 is a diagram which enlarges and shows a part of Fig. 3; not according to the invention.
Figs. 5 to 7 are diagrams showing a sealing part not according to the invention; and
Figs. 8 and 9 are diagrams showing the upper part of the module; Fig. 8 according to the invention and Fig. 9 not according to the invention; and
Figs. 10 and 11 are diagrams showing a sealing part according to a comparative example.

### [DETAILED DESCRIPTION OF THE EMBODIMENTS]

Hereinafter, various embodiments of the present disclosure will be described in detail with reference to the accompanying drawings so that those skilled in the art can easily carry out them.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Hereinafter, a battery module according to one embodiment of the present disclosure will be described. However, the battery module will be described on the basis of the front and rear surfaces thereof, but is not necessarily limited thereto. Even in the case of the rear surface, it may be described in the same or similar manner.

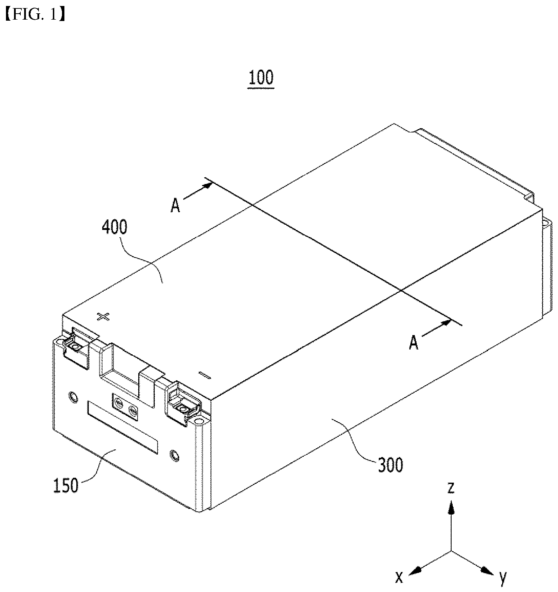

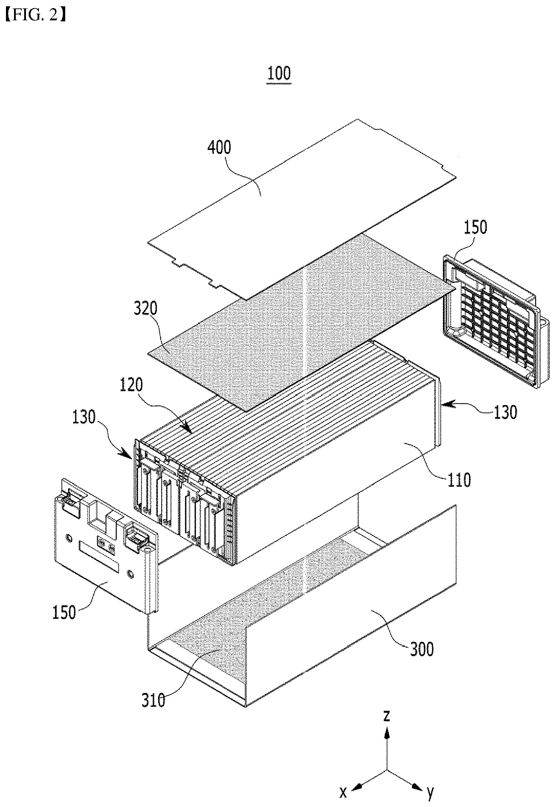

Fig. 1 is a perspective view of a battery module according the invention. Fig. 2 is an exploded perspective view of the battery module of Fig. 1.

Referring to Fig. 1, a battery module 100 according to the present embodiment includes a battery cell stack 120 in which a plurality of battery cells 110 are stacked, and module frames 300 and 400 that house the battery cell stack 120.

Here, the battery cell stack 120 housed in the module frames 300 and 400 is configured by stacking a plurality of battery cells 110 in one direction, wherein the battery cell 110 is preferably a pouch-type battery cell. The battery cell 110 can be manufactured by housing the electrode assembly in a pouch case of a laminated sheet including a resin layer and a metal layer, and then heat-sealing a sealing part of the pouch case. Such a battery cell 110 may be composed by a plurality of numbers, and the plurality of battery cells 110 may be stacked so as to be electrically connected to each other, thereby forming a battery cell stack 120.

Also, the module frames 300 and 400 includes a lower frame 300 that is opened in the upper surface, front surface and rear surface thereof, and an upper plate 400 that covers the upper part of the battery cell stack 120. Here, the upper part of the module frames 300 and 400 may mean the upper plate 400. In addition, the lower frame 300 includes a bottom part covering the lower surface of the battery cell stack 120 and the side surface part covering the side surface of the battery cell stack 120. However, the module frames 300 and 400 are not limited thereto, and may be replaced with a mono frame in which one side part is coupled to the upper part of the L-shaped frame, or which surrounds the battery cell stack 120 except for the front and rear surfaces.

Further, referring to Fig. 1, end plates 150 are located on the front and rear surfaces of the battery cell stack 120, respectively. That is, the end plates 150 may be located on the opened both surfaces of the module frames 300 and 400.

The module frames 300 and 400 and the end plate 150 can be joined by welding or the like in a state in which the mutually corresponding corner portions are in contact. However, this is an exemplary method, and bolt fastening, hook fastening, or the like can be applied as a mechanical coupling form. The battery cell stack 120 is housed in the space formed by the module frames 300 and 400 and the end plates 150, thereby capable of physically protecting the battery cell stack 120. For this purpose, the module frames 300 and 400 and the end plate 150 may include a metal material having a predetermined strength such as aluminum or a plastic material.

Meanwhile, the battery module 100 according to the present embodiment includes a busbar frame 130 located between the battery cell stack 120 and the end plate 150. More specifically, the busbar frame 130 includes a first busbar frame and a second busbar frame, wherein the first busbar frame is located on the front surface of the battery cell stack 120, and the second busbar frame is located on the rear surface of the battery cell stack 120.

Further, the battery module 100 may include an insulating cover (not shown) located between the busbar frame 130 and the end plate 150. That is, the busbar frame 130, the insulating cover (not shown), and the end plate 150 may be located in this order outwards from the battery cell stack 120.

Further, a lower thermal conductive material layer 310 may be located between the battery cell stack 120 and the lower frame 300. In one example, the lower thermal conductive material layer 310 may be formed by applying a thermal conductive resin onto the lower frame 300 and then curing it, before the battery cell stack 120 is mounted on the lower frame 300. In another example, the lower thermal conductive material layer 310 may be made of a material such as a thermal conductive film or a thermal conductive pad in addition to the thermal conductive resin. However, the present disclosure is not limited thereto, and any material including a thermal conductive material can be included in this embodiment.

Thereby, the lower thermal conductive material layer 310 can transfer heat generated in the battery cell 110 to the bottom of the battery module 100 to cool the battery cell 110.

The sealing part 110s of the battery cell 110 and the upper thermal conductive material layer 320 will be described in detail below on the basis of the upper part of the module frames 300 and 400.

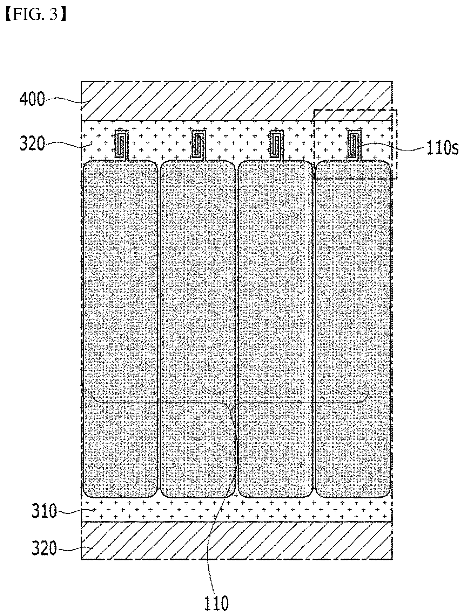

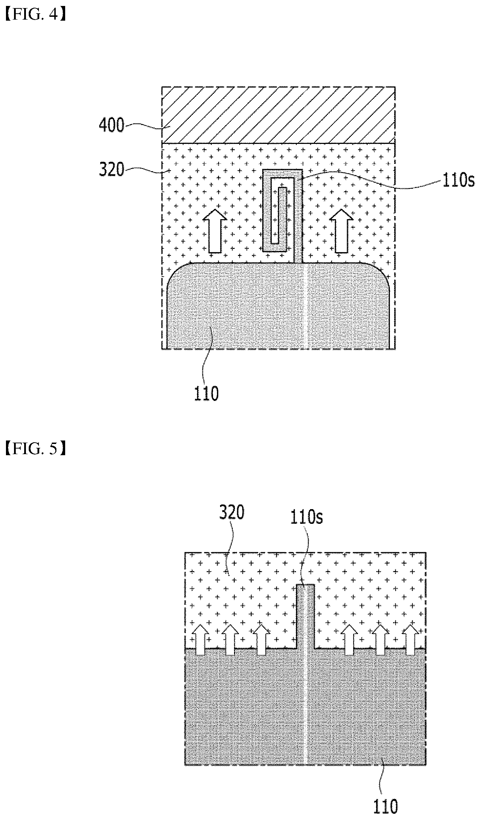

Fig. 3 is a view showing a part of a cross section cut along the axis A-A' of Fig. 1. Fig. 4 is a diagram which enlarges and shows a part of Fig. 3.

Referring to Figs. 3 and 4 (not according to the invention), in the battery module 100 of the present embodiment, the battery cell 110 includes a sealing part 110s in which a part of the outer peripheral surface of the battery cell 110 is sealed. In one example, the sealing part 110s can be formed by press-sealing or heat-sealing a part of the outer peripheral surface of the battery cell 110.

Here, the battery cell 110 may be arranged in a direction in which the sealing part 110s heads for the upper parts of the module frames 300 and 400 as shown in Fig. 3. In one example, the battery cell 110 may be in a direction in which the sealing part 110s heads for the upper plate 400.

Thereby, the lower part of the battery cell 110 is not formed with the sealing part 110s, so that heat transfer between the battery cell 110 and the lower thermal conductive material layer 310 can be performed relatively easily, and the cooling performance can be further improved.

Referring to Figs. 2 to 4, the battery module 100 according to the present embodiment includes an upper thermal conductive material layer 320 located between the upper surface of the battery cell stack 120 and the upper part of the module frames 300 and 400. Here, the upper thermal conductive material layer 320 may cover the outer surface of the sealing part 110s. More specifically, the upper thermal conductive material layer 320 may come into contact with the outer surface of the sealing part 110s.

In one example, after the battery cell stack 120 is mounted on the lower frame 300, the upper thermal conductive material layer 320 can be formed by applying the thermal conductive resin onto the battery cell stack 120 and then curing it. In another embodiment, the upper thermal conductive material layer 320 may be made of a material such as a thermal conductive film or a thermal conductive pad, in addition to the thermal conductive resin. However, the present disclosure is not limited thereto, and any material including a thermal conductive material can be included in the present embodiment.

Thereby, the upper thermal conductive material layer 320 can transfer heat generated in the battery cell 110 to the upper part of the battery module 100 to cool the battery cell 110.

Further, referring to Figs. 3 and 4, the sealing part 110s may have a length extending toward the upper part of the module frames 300 and 400 that is equal to or greater than a length extending along the upper part of the battery cell 110. In one embodiment, as shown in Figs. 3 and 4, the sealing part 110s may have a length extending toward the upper part of the module frames 300 and 400 that is greater than a length extending along the upper part of the battery cell 110.

Thus, in the present embodiment, in the heat transfer path from the upper part of the battery cell 110 toward the upper thermal conductive material layer 320, the area occupied by the sealing part 110s can be minimized. That is, by maximizing the contact area between the upper part of the battery cell 110 and the upper thermal conductive material layer 320, a heat transfer area between the battery cell 110 and the upper thermal conductive material layer 320 can be maximized, and the cooling performance of the battery cell 110 by the upper thermal conductive material layer 320 can be improved.

The sealing part 110s may be folded at least once in a clockwise or counterclockwise direction. In one example, as shown in Figs. 3 and 4, the sealing part 110s may be folded twice in a counterclockwise direction.

Here, the length by which the sealing part 110s extends along the upper part of the battery cell 110 may mean the portion extending along the upper part of the battery cell 110 on the basis of the entirety of the sealing part 110s that is folded at least once. Also, the length by which the sealing part 110s extends toward the upper part of the module frames 300 and 400 may mean a portion extending toward the upper part of the module frames 300 and 400 on the basis of the entirety of the sealing part 110s that is folded at least once.

Further, the folded surfaces of the sealing part 110s may be in contact with each other. In other words, as the sealing part 110s is folded at least once, the folded surfaces may be in contact with each other.

Thus, in the present embodiment, when the area of the sealing part 110s is relatively large, the sealing part 110s is folded at least once while improving the sealing performance of the battery cell 110, so that space utilization within the battery module 100 can be maximized. Moreover, even when the sealing part 110s is folded at least once, the area occupied by the sealing part 110s on the upper part of the battery cell 110 can be minimized.

In one example, a part of the upper thermal conductive material layer 320 may be located between the folded surfaces of the sealing part 110s. When the upper thermal conductive material layer 320 is formed by applying a thermal conductive material onto the upper part of the battery cell stack 120, a part of the thermal conductive material can inflow between the folded surfaces of the sealing parts 110s.

In another example, an internal thermal conductive material layer may be located on the folded surface of the sealing part 110s. Here, the thermal conductive material constituting the inner thermal conductive material layer may have a thermal conductivity higher than or equal to that of the thermal conductive material constituting the upper thermal conductive material layer 320.

More specifically, the upper thermal conductive material layer 320 and the inner thermal conductive material layer may each include at least one of acrylic and silicon materials. However, the present disclosure is not limited thereto, and generally, any material having thermal conductivity can be included in the present embodiment.

Thereby, in the battery cell 100 of the present embodiment, a thermal conductive material is included in the inside of the sealing part 110s, so that the degree of heat transfer between the sealing part 110s and the upper thermal conductive material layer 320 can be enhanced, and the cooling performance of the upper thermal conductive material layer 320 for the battery cells 110 can be improved.

Further, in the battery cell 100 according to another embodiment of the present invention, a fixing member (not shown) can be attached to the outer surface of the sealing part 110s. In one example, the fixing member (not shown) can be made of a material such as a tape or a general adhesive material. In another example, the fixing member (not shown) may be made of an adhesive material having thermal conductivity. However, the present disclosure is not limited thereto, and any material capable of fixing the outer surface of the sealing part 110s may be included in the present embodiment.

Thereby, the fixing member (not shown) can prevent the sealing part 110s from being folded or damaged in the process of mounting the battery cell 110 in the module frame 300 or 400.

Figs. 5 to 7 (not according to the invention) are diagrams showing a sealing part according to another embodiment of the present disclosure.

Referring to Figs. 1, 2, and 5 to 7, in the battery module 100 according to the present embodiment, the sealing part 110s has a length extending toward the upper part of the module frames 300 and 400 that is equal to or longer than the length extending along the upper part of the battery cell 110, and the sealing part 110s may have various shapes other than the sealing parts 110s of Figs. 3 and 4.

In one example, as shown in Fig. 5, the sealing part 110s may have a shape extending from the upper part of the battery cell 110 toward the upper part of the module frames 300 and 400. In this case, the area occupied by the sealing part 110s on the battery cell 110 can be minimized. In addition, the entire outer surface of the sealing part 110s can be wrapped with the upper thermal conductive material layer 320.

Thereby, the contact area between the upper part of the battery cell 110 and the upper thermal conductive material layer 320 is maximized, so that the heat transfer area between the battery cell 110 and the upper thermal conductive material layer 320 can be maximized, and the cooling performance of the battery cell 110 due to the upper thermal conductive material layer 320 can be further improved.

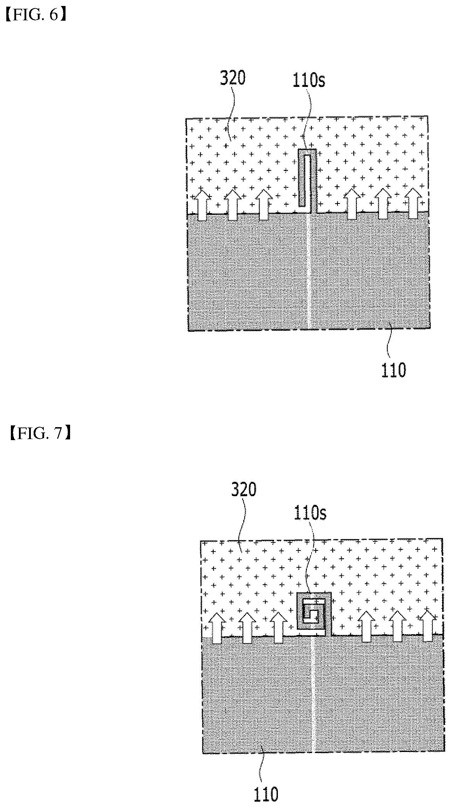

In another example, as shown in Fig. 6, the sealing part 110s may have a shape that is folded once in a counterclockwise direction. In this case, by increasing the area of the sealing part 110s compared to Fig. 5, it is possible to improve the sealing property of the battery cell 110 and maximize space utilization in the battery module 100.

Thereby, in addition to this, even when the sealing part 110s is folded at least once, the area occupied by the sealing part 110s on the upper part of the battery cell 110 can be minimized.

In another example, as shown in Fig. 7, the sealing part 110s may have a shape that is folded multiple times. More specifically, the sealing part 110s may have the lengths extending toward the upper parts of the module frames 300 and 400 that are equal to or similar to the lengths extending along the upper portions of the battery cells 110. In this case, the length by which the sealing part 110s extends toward the upper part of the module frames 300 and 400 is smaller than that of Figs. 4 to 6, so that an area of the upper thermal conductive material layer 320 located on the upper part of the sealing part 110s can be maximized.

Thereby, in the battery cell 100 of the present embodiment, the degree of heat transfer between the upper part of the sealing part 110s and the upper thermal conductive material layer 320 can be increased and the cooling performance of the upper thermal conductive material layer 320 for the battery cell 110 can be improved.

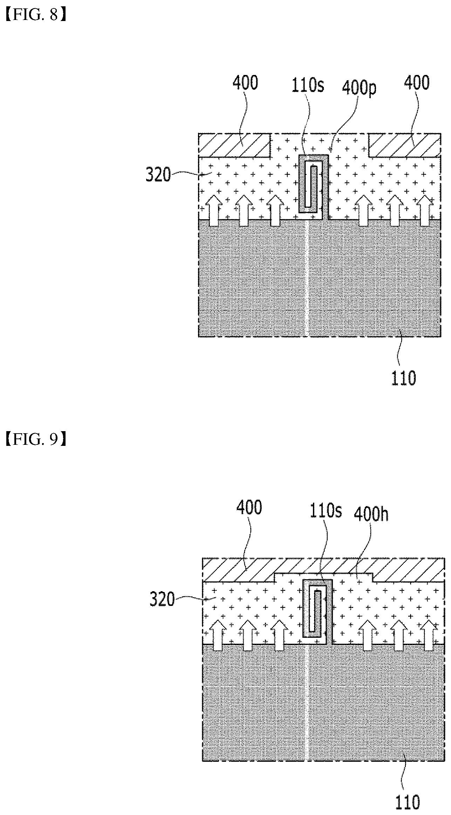

Figs. 8 and 9 are diagrams showing the upper part of the module frame according to another embodiment of the present disclosure.

Referring to Fig. 8, in the battery module 100 according to the invention, the module frames 300 and 400 includes a penetrating part 400p through which a part of the upper parts of the module frames 300 and 400 penetrate. Here, the penetrating part 400p is located on the upper part of the sealing part 110s. More specifically, the penetrating part 400p may be formed longer than the length of the sealing part 110s extending along the upper part of the battery cell 110.

In one example, the penetrating part 400p may be formed in a slit shape. However, the present disclosure is not limited thereto, and a portion penetrated from the upper part of the module frames 300 and 400 may have various shapes.

Moreover, the upper thermal conductive material layer 320 extends from the upper part of the module frames 300 and 400 to the penetrating part 400p. In this case, the area of the upper thermal conductive material layer 320 located on the upper part of the sealing part 110s may be relatively increased.

Thereby, in the battery cell 100 of the invention, the module frames 300 and 400 include a penetrating part 400p, so that the degree of heat transfer between the upper part of the sealing part 110s and the upper thermal conductive material layer 320 can be increased, and the cooling performance of the upper thermal conductive material layer 320 for the battery cell 110 can be effectively improved.

Referring to Fig. 9 (not according to the invention), in the battery module 100 according to another embodiment of the present disclosure, a recessed part 400h may be formed on the lower surface of the upper part of the module frames 300 and 400. Here, the recessed part 400h may mean a portion that is recessed toward the upper surface of the upper part of the module frame 300 or 400 on the basis of the lower surface of the upper part of the module frame 300 or 400. In addition, the recessed part 400h may be located in the upper part of the sealing part 110s. More specifically, the recessed part 400h may be formed longer than the length of the sealing part 110s extending along the upper part of the battery cell 110.

Further, the upper thermal conductive material layer 320 may extend up to the inside of the recessed part 400h. In this case, the area of the upper thermal conductive material layer 320 located on the upper part of the sealing part 110s can be relatively increased.

Thereby, in the battery cell 100 of the present embodiment, the degree of heat transfer between the upper part of the sealing part 110s and the upper thermal conductive material layer 320 can be increased, and the cooling performance of the upper thermal conductive material layer 320 for the battery cell 110 can be improved. In addition, the upper part of the sealing part 110s can be covered with the upper part of the module frames 300 and 400, so that the battery cell 110 can be protected from external impact.

Next, a battery module according to a comparative example will be described, and the battery module according to the comparative example may be mostly described in the same manner as the battery module 100 described with reference to Figs. 1 to 4, and the different parts will be mainly described

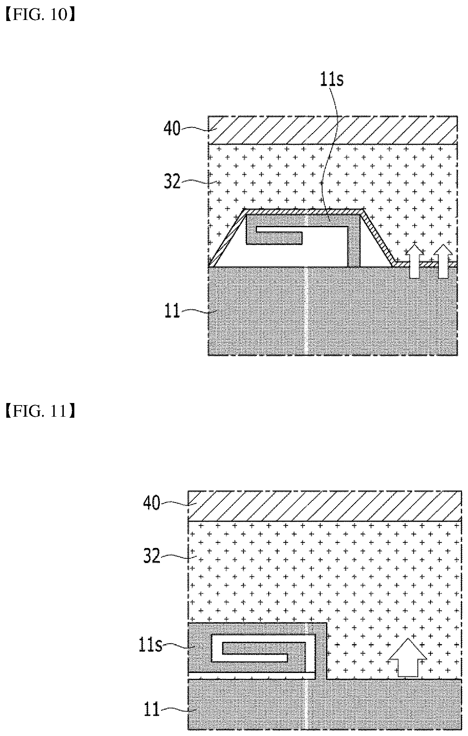

Figs. 10 and 11 are diagrams showing a sealing part according to a comparative example.

Referring to Figs. 10 and 11, in the battery cell 11 included in the battery module according to the comparative example, the sealing part 11s is folded toward the upper part of the battery cell 11. More specifically, in the comparative example, the sealing part 11s has a length extending toward the upper plate 40 that is smaller than a length extending along the upper part of the battery cell 11. In this case, the area occupied by the sealing part 11s on the upper part of the battery cell 11 is too large, so that the sealing part 11s can hinder heat transfer between the upper thermal conductive material layer 32 and the upper part of the battery cell 11. In particular, the sealing part 11s can act as a high thermal resistance in a heat transfer path between the upper thermal conductive material layer 32 and the upper part of the battery cell 11. Thereby, in the battery module of the comparative example, the sealing part 11s has a problem of degrading the cooling performance of the upper thermal conductive material layer 32 for the battery cell 11.

On the other hand, referring to Figs. 1 to 9, in the battery module 100 according to the present embodiment, the sealing part 110s has a length extending toward the upper part of the module frames 300 and 400 that is equal to or smaller than a length extending along the upper part of the battery cell 110, so that the area occupied by the sealing part 110s on the upper part of the battery cell 110 can be minimized, and the cooling performance of the upper thermal conductive material layer 320 for the battery cell 110 can also be further improved.

Meanwhile, one or more battery modules according to the present embodiment can be packaged in a pack case to form a battery pack.

The above-mentioned battery module and the battery pack including the same can be applied to various devices. Such a device can be applied to a vehicle means such as an electric bicycle, an electric vehicle, or a hybrid vehicle, but the present disclosure is not limited thereto, and is applicable to various devices that can use a battery module or a battery pack including the same, which is also falls under the scope of the present disclosure.

### [Description of Reference Numerals]

100: battery module
11, 110: battery cell
11s, 110s: sealing part
120: battery cell stack
130: busbar frame
150: end plate
300: lower frame
310: lower thermal conductive material layer
32, 320: upper thermal conductive material layer
40, 400: upper plate

## Claims

1. A battery module (100) comprising:
a battery cell stack (120) in which a plurality of battery cells (110) are stacked;
a module frame (300, 400) that houses the battery cell stack (120); and
an upper thermal conductive material layer (320) located between the upper surface of the battery cell stack and the upper part of the module frame,
wherein each battery cell (110) includes a sealing part (110s) in which a part of an outer peripheral surface of the battery cell (110) is sealed, and each battery cell is configured such that the sealing part is arranged in a direction toward an upper part of the module frame (400),
wherein the upper thermal conductive material layer (320) wraps around the outer surface of the sealing parts (110s), and
wherein the sealing parts (110s) have a length extending toward the upper part of the module frame (400) that is equal to or greater than a length extending along the upper part of the battery cell (110),
**characterised in that**
the module frame (300, 400) includes penetrating parts (400p) located on the upper part of the sealing parts (110s), and
the upper thermal conductive layer (320) extends up to the penetrating parts (400p).

2. The battery module (100) according to claim 1, wherein:
the sealing part (110s) has a length extending toward the upper part of the module frame (400) that is greater than the length extending along the upper part of the battery cell.

3. The battery module (100) according to claim 1, wherein:
the sealing part (110s) is folded at least once in a clockwise or counterclockwise direction.

4. The battery module (100) according to claim 3, wherein:
an internal thermal conductive material layer is located on the folded surface of the sealing part (110s).

5. The battery module (100) according to claim 3, wherein:
the folded surfaces of the sealing part (110s) are in contact with each other.

6. The battery module (100) according to claim 1, wherein:
the penetrating part (400p) is formed longer than the length of the sealing part extending along the upper part of the battery cell (110).

7. The battery module (100) according to claim 1, further comprising:
a lower thermal conductive material layer (310) located between the lower surface of the battery cell stack (120) and the lower part of the module frame (300).

8. A battery pack comprising the battery module (100) as set forth in claim 1.

## Patentansprüche

1. Batteriemodul (100), umfassend:
einen Batteriezellenstapel (120), in welchem eine Mehrzahl von Batteriezellen (110) gestapelt ist;
einen Modulrahmen (300, 400), welcher den Batteriezellenstapel (120) aufnimmt;
und
eine obere thermisch leitfähige Materialschicht (320), welche sich zwischen der oberen Fläche des Batteriezellenstapels und dem oberen Teil des Modulrahmens befindet,
wobei jede Batteriezelle (110) einen abdichtenden Teil (110s) umfasst, in welchem ein Teil einer äußeren Umfangsfläche der Batteriezelle (110) abgedichtet ist, und jede Batteriezelle derart konfiguriert ist, dass der abdichtende Teil in einer Richtung hin zu einem oberen Teil des Modulrahmens (400) angeordnet ist,
wobei die obere thermisch leitfähige Materialschicht (320) die äußere Fläche der abdichtenden Teile (110s) umhüllt und
wobei die abdichtenden Teile (110s) eine sich hin zu dem oberen Teil des Modulrahmens (400) erstreckende Länge aufweisen, welche gleich wie oder größer als eine Länge ist, welche sich entlang des oberen Teils der Batteriezelle (110) erstreckt,
**dadurch gekennzeichnet, dass**
der Modulrahmen (300, 400) durchdringende Teile (400p) umfasst, welche sich an dem oberen Teil der abdichtenden Teile (110s) befinden, und
sich die obere thermisch leitfähige Schicht (320) bis hin zu den durchdringenden Teilen (400p) erstreckt.

2. Batteriemodul (100) nach Anspruch 1, wobei:
der abdichtende Teil (110s) eine sich hin zu dem oberen Teil des Modulrahmens (400) erstreckende Länge aufweist, welche größer ist als die Länge, welche sich entlang des oberen Teils der Batteriezelle erstreckt.

3. Batteriemodul (100) nach Anspruch 1, wobei:
der abdichtende Teil (110s) wenigstens einmal in einer Richtung im Uhrzeigersinn oder gegen den Uhrzeigersinn gefaltet ist.

4. Batteriemodul (100) nach Anspruch 3, wobei:
sich eine innere thermisch leitfähige Materialschicht auf der gefalteten Fläche des abdichtenden Teils (110s) befindet.

5. Batteriemodul (100) nach Anspruch 3, wobei:
die gefalteten Flächen des abdichtenden Teils (110s) in Kontakt miteinander sind.

6. Batteriemodul (100) nach Anspruch 1, wobei:
der durchdringende Teil (400p) länger gebildet ist als die Länge des abdichtenden Teils, welche sich entlang des oberen Teils der Batteriezelle (110) erstreckt.

7. Batteriemodul (100) nach Anspruch 1, ferner umfassend:
eine untere thermisch leitfähige Materialschicht (310), welche sich zwischen der unteren Fläche des Batteriezellenstapels (120) und dem unteren Teil des Modulrahmens (300) befindet.

8. Batteriepack, umfassend das Batteriemodul (100) nach Anspruch 1.

## Revendications

1. Module de batterie (100) comprenant :
un empilement de cellules de batterie (120) dans lequel une pluralité de cellules de batterie (110) sont empilées ;
un cadre de module (300, 400) qui loge l'empilement de cellules de batterie (120) ; et
une couche supérieure de matériau thermoconducteur (320) située entre la surface supérieure de l'empilement de cellules de batterie et la partie supérieure du cadre de module,
dans lequel chaque cellule de batterie (110) comporte une partie de scellement (110s) dans laquelle une partie d'une surface périphérique externe de la cellule de batterie (110) est scellée, et chaque cellule de batterie est configurée de sorte que la partie de scellement soit agencée dans une direction vers une partie supérieure du cadre de module (400),
dans lequel la couche supérieure de matériau thermoconducteur (320) est enroulée autour de la surface externe des parties de scellement (110s), et
dans lequel les parties de scellement (110s) ont une longueur s'étendant vers la partie supérieure du cadre de module (400) qui est supérieure ou égale à une longueur s'étendant le long de la partie supérieure de la cellule de batterie (110),
**caractérisé en ce que**
le cadre de module (300, 400) comporte des parties pénétrantes (400p) situées sur la partie supérieure des parties de scellement (110s), et
la couche supérieure thermoconductrice (320) s'étend jusqu'aux parties pénétrantes (400p).

2. Module de batterie (100) selon la revendication 1, dans lequel :
la partie de scellement (110s) a une longueur s'étendant vers la partie supérieure du cadre de module (400) qui est supérieure à la longueur s'étendant le long de la partie supérieure de la cellule de batterie.

3. Module de batterie (100) selon la revendication 1, dans lequel :
la partie de scellement (110s) est pliée au moins une fois dans un sens horaire ou antihoraire.

4. Module de batterie (100) selon la revendication 3, dans lequel :
une couche interne de matériau thermoconducteur est située sur la surface pliée de la partie de scellement (110s).

5. Module de batterie (100) selon la revendication 3, dans lequel :
les surfaces pliées de la partie de scellement (110s) sont en contact l'une avec l'autre.

6. Module de batterie (100) selon la revendication 1, dans lequel :
la partie pénétrante (400p) est formée de sorte que sa longueur soit supérieure à la longueur de la partie de scellement s'étendant le long de la partie supérieure de la cellule de batterie (110).

7. Module de batterie (100) selon la revendication 1, comprenant en outre:
une couche inférieure de matériau thermoconducteur (310) située entre la surface inférieure de l'empilement de cellules de batterie (120) et la partie inférieure du cadre de module (300).

8. Bloc-batterie comprenant le module de batterie (100) selon la revendication 1.
